# EUROPÄISCHE PATENTSCHRIFT

(11) **EP 2 850 565 B1**
(45) Veröffentlichungstag und Bekanntmachung des Hinweises auf die Patenterteilung: **11.05.2016**
(21) Anmeldenummer: 13725583.2
(22) Anmeldetag: 13.05.2013
(51) Int. Cl.: G06Q 10/00

(54) **ÜBERPRÜFEN EINES BAUTEILS IN EINER INDUSTRIEANLAGE MITTELS EINES MOBILEN BEDIENGERÄTS**
VERIFICATION OF A COMPONENT IN AN INDUSTRIAL PLANT BY MEANS OF A MOBILE OPERATING DEVICE
VÉRIFICATION D'UN ÉLÉMENT DANS UNE INSTALLATION INDUSTRIELLE AU MOYEN D'UN APPAREIL DE COMMANDE MOBILE

(30) Priorität: 15.05.2012 DE 102012208138
(43) Veröffentlichungstag der Anmeldung: 25.03.2015
(73) Patentinhaber: Primetals Technologies Germany GmbH, 91052 Erlangen (DE)
(72) Erfinder: LEHOFER, Martin, Plainsboro, NJ 08536 (US)
(74) Vertreter: Metals@Linz
(86) Internationale Anmeldenummer: PCT/EP2013/059795
(87) Internationale Veröffentlichungsnummer: WO 2013/171150

(56) Entgegenhaltungen:
- US-A1- 2008 177 665
- US-A1- 2009 051 502
- US-A1- 2011 173 127

## Beschreibung

### Gebiet der Technik

Die vorliegende Erfindung betrifft ein Verfahren zum Überprüfen eines Elements, beispielsweise einer Baugruppe, eines Bauteil oder eines Einzelteil, in einer Industrieanlage mittels eines mobilen Bediengeräts, wobei dem Element eine elementspezifische Kennung festgelegt ist.

### Stand der Technik

Eine Industrieanlage - wie ein Kraftwerk, ein metallurgisches Hüttenwerk, eine Stranggießanlage, ein Walzwerk, etc. - bzw. die einzelnen Baugruppen, Bauteile oder Einzelteile der Industrieanlage müssen regelmäßig überprüft werden, um die Funktionsfähigkeit der Anlage sicherstellen zu können. Bedingt durch die Weitläufigkeit der Industrieanlage, ungünstige Umweltbedingungen (z.B. Lärm, schlechte oder keine Beleuchtung, Verschmutzung) und häufige Veränderungen der Anlage ist es selbst für erfahrenes Bedienpersonal schwierig, ein Element der Industrieanlage (d.h. eine Baugruppe, einen Bauteil der Baugruppe, oder einen Einzelteil des Bauteils) rasch und vor allem ohne Verwechslungen lokalisieren, identifizieren und in der Folge überprüfen zu können. Außerdem hat ein mit der Überprüfung des Elements befasster Bedienmann am Standort des Elements im Allgemeinen keinen Zugriff auf die Steuerung der Industrieanlage bzw. auf ein sogenanntes *Condition Monitoring Systems,* das der Industrieanlage zugeordnet ist. Somit muss der Bedienmann bei der Überprüfung einerseits selbst eine Ist-Zustandsgröße des Elements messtechnisch erfassen und andererseits, die zulässige Soll-Zustandsgröße des Elements aus statischen Daten (z.B. Datenblättern, mündlich oder schriftlich übergebene, Informationen oder aus eigenem Wissen) ermitteln, um die Funktion des Elements überprüfen zu können. Da statische Daten häufig nicht dem Änderungsdienst unterliegen, ist deren Nutzen beschränkt. Somit ist es aber selbst für erfahrenes Bedienpersonal schwierig, ein Element in der Industrieanlage zu überprüfen. Diese Problematik wird durch den Einsatz von Personal mit geringen Ortskenntnissen bzw. geringen Kenntnissen der Anlage selbst (z.B. neues Personal oder Leiharbeitern) weiter verschärft.

Aus US 2009/051502 A1 ist ein Verfahren zum Überprüfen eines Elements einer Industrieanlage bekannt, bei dem eine Kennung des Elements berührungslos mittels eines Bediengeräts eingelesen wird. Das Element wird durch Vergleich der eingelesenen Kennung mit einer festgelegten Kennung des Elements identifiziert. Ein ähnliches Verfahren ist auch in US 2011/173127 A1 beschrieben. Darüber hinaus ist aus US 2008/177665 A1 bekannt, mobile Bediengeräte und Barcodes in einem Verfahren zum Überprüfen eines Elements einer Industrieanlage zu verwenden.

### Zusammenfassung der Erfindung

Die Aufgabe der Erfindung ist es, ein Verfahren zum Überprüfen eines Elements einer Industrieanlage mittels eines mobilen Bediengeräts darzustellen, sodass ein Bediener unter Zuhilfenahme des mobilen Bediengeräts das Element
- rasch, d.h. innerhalb einer kurzen Zeit für die Überprüfung des Elements, und
- umfassend, d.h. unter Zuhilfenahme umfangreicher elementspezifischer Informationen,
überprüfen kann.

Diese Aufgabe wird durch ein Verfahren zum Überprüfen eines Elements in einer Industrieanlage mittels eines mobilen Bediengeräts nach Anspruch 1 gelöst. Vorteilhafte Ausführungsformen sind Gegenstand der abhängigen Ansprüche.

Konkret umfasst das Verfahren zum Überprüfen eines Elements einer Industrieanlage mittels eines mobilen Bediengeräts, wobei an dem Element eine elementspezifische Kennung festgelegt ist, folgende Verfahrensschritte:
- berührungsloses Einlesen der Kennung des Elements durch das Bediengerät;
- Identifizieren des Elements durch den Vergleich der eingelesenen Kennung mit der festgelegten Kennung des Elements;
- Übertragen von zumindest einer elementspezifischen Information für das identifizierte Element auf das Bediengerät, wobei die elementspezifische Information eine Ist-Zustandsgröße des Elements ist; und
- Ausgabe der übertragenen elementspezifischen Information am Bediengerät.

Im ersten Schritt wird eine, beispielsweise optische oder signaltechnische, Kennung des Elements (auch als Signatur des Elements bezeichnet) durch das Bediengerät berührungslos eingelesen. Unter dem Begriff "berührungsloses Einlesen" soll das Einlesen einer Kennung verstanden werden, ohne dass das Bediengerät beim Einlesen das Element berühren muss. Anschließend wird die eingelesene Kennung mit einer festgelegten Kennung des Elements verglichen, wodurch das Element eindeutig identifiziert werden kann. Durch die Identifikation wird sichergestellt, dass das richtige Element überprüft wird und nicht - wie gegebenenfalls nach dem Stand der Technik - ein möglicherweise im Nahbereich angeordnetes Objekt, das dem Element eventuell ähnlich ist.
Danach wird zumindest eine elementspezifischen Information, beispielsweise eine aktuelle Ist-Zustandsgröße wie ein Druck, ein Strom, eine Spannung, Anzahl der Betriebsstunden, Anzahl der produzierten Chargen, Vibrationsdaten, Anzahl oder Zeitdauer der Überschreitung von Auslegungsparametern etc., für das identifizierte Element von einer Steuerung der Industrieanlage oder von einem der Industrieanlage zugeordneten Condition Monitoring System auf das Bediengerät drahtlos übertragen, sodass im nächsten Schritt die elementspezifischen Information auf dem Bediengerät ausgegeben werden kann.
Die Ausgabe der elementspezifischen Information kann beispielsweise optisch durch eine Anzeige oder akustisch durch Sprachausgabe erfolgen.

Bei einer einfachen Ausführungsform erfolgt das Einlesen der Kennung des Elements optisch. Dies kann beispielsweise durch eine Kamera oder einen engl. *Barcode Reader* am Bediengerät erfolgen, der ein Bild der elementspezifischen Kennung des Elements aufnimmt.

Da Barcode Reader weit verbreitet sind, ist es zweckmäßig, wenn die elementspezifische Kennung ein 1-dimensionaler oder ein 2-dimensionaler Barcode ist. Anstelle von Barcodes können auch sogenannte "Mobile Tags" verwendet werden (siehe http://de.wikipedia.org/wiki/Mobile-Tagging).

Um beim Einlesen einer optischen Kennung einen Lesefehler aufgrund von Verschmutzungen des Elements bzw. der Kamera des Bediengeräts zu vermeiden, ist es vorteilhaft, wenn die optisch eingelesene Kennung einem Fehlererkennungsverfahren unterzogen wird. Durch das Fehlererkennungsverfahren kann zum einen festgestellt werden, ob beim Einlesen der Kennung ein Fehler aufgetreten ist. Bei der Anwendung eines sogenannten selbstkorrigierenden Codes für die Kennung kann der Fehler außerdem selbsttätig korrigiert werden. Fehlerkorrekturverfahren sind dem Fachmann bekannt, siehe http://de.wikipedia.org/wiki/Fehlerkorrekturverfahren.

Prinzipiell ist die Anwendung des Fehlererkennungsverfahrens nicht auf optische Kennungen beschränkt, sondern kann für alle Kennungen (somit auch Funkkennungen) verwendet werden.

Alternativ zu Anspruch 2 ist es möglich, dass das Einlesen der Kennung des Elements über Funk erfolgt. Dies kann z.B. über eine NFC (engl. *Near Field Communication)* Schnittstelle am Bediengerät erfolgen, das eine elementspezifische Kennung eines aktiven oder passiven RFID-Tags einliest.

Zusätzlich zu einer Kennung kann ein RFID Tag aber auch eine elementspezifische Zustandsgröße (z.B. eine Temperatur) des Elements auf das Bediengerät übertragen. Auch diese Zustandsgröße kann am Bediengerät - gegebenenfalls gemeinsam mit einer zugeordneten Soll-Zustandsgröße aus der Anlagensteuerung bzw. einem Condition Monitoring System - ausgegeben werden.

Für eine größtmögliche Bewegungsfreiheit des Bediengeräts ist es vorteilhaft, wenn die Zustandsgröße über ein drahtloses paketorientiertes Netzwerk auf das Bediengerät übertragen wird. Hierzu weist sowohl das Bediengerät als auch die Anlagensteuerung oder das Condition Monitoring System, das der Anlage zugeordnet ist, eine Schnittstelle zum drahtlosen Netzwerk auf.

Zumeist ist es zweckmäßig, die übertragene elementspezifische Information am Bediengerät optisch anzuzeigen oder akustisch auszugeben.

Besonders vorteilhaft ist es, wenn die elementspezifische Information eine Ist-Zustandsgröße des Elements ist. Dadurch kann die Überprüfung des Elements unter realistischen Bedingungen, insbesondere unter Berücksichtigung des aktuellen Zustands der Industrieanlage, erfolgen. Außerdem ist es dabei im Allgemeinen nicht notwendig, die Zustandsgröße vor Ort zu messen. Somit müssen empfindliche Messgeräte nicht vor Ort gebracht werden. Außerdem kann die Funktion des Elements während des Betriebs der Anlage überprüft werden, sodass auch Effekte die nur bei gewissen Arbeitspunkten auftreten, der Überprüfung zugänglich sind.

Um dem Bediener eine umfassende Bewertung der Funktionalität des Elements (z.B. ein sogenannter Soll-Ist-Vergleich) zu ermöglichen, ist es vorteilhaft, wenn die elementspezifische Information einen Soll-Wert der Zustandsgröße des identifizierten Elements umfasst.

Für die Fehlerbehebung ist es vorteilhaft, wenn die elementspezifische Information ein Datenblatt oder eine Notiz umfasst. Bei der Notiz kann es sich z.B. um eine Bemerkung bei einer früheren Überprüfung handeln.

Bei der Überprüfung bzw. der Fehlerbehebung des Elements ist es vorteilhaft, wenn nach der Überprüfung des Elements eine Bezeichnung des Elements und ein Zeitstempel der Überprüfung in einer Datenbank abgelegt werden. Außerdem ist es meist sinnvoll, den Namen des Bedieners, die Ist-Zustandsgröße sowie gegebenenfalls die Soll-Zustandsgröße abzulegen. Dadurch kann die Überprüfung dokumentiert werden.

Bei der Überprüfung bzw. der Fehlerbehebung des Elements ist es vorteilhaft, wenn als elementspezifische Information eine Information über eine elementspezifische Routine (z.B. ein Selbsttest), die sich in einer Anlagensteuerung oder einem Condition Monitoring System befindet, auf das Bediengerät übertragen wird, und diese Routine am Bediengerät aufgerufen bzw. ausgelöst werden kann. Dadurch kann der Bediener das Element umfassend überprüfen. Z.B. kann nachdem das Element in Schwingungen versetzt worden ist - etwa mit einem Hammer-eine erneute Bewertung der Vibrationsmessungen ausgelöst werden.

### Kurze Beschreibung der Zeichnungen

Weitere Vorteile und Merkmale der vorliegenden Erfindung ergeben sich aus der nachfolgenden Beschreibung nicht einschränkender Ausführungsbeispiele, wobei auf die folgenden Figuren Bezug genommen wird, die Folgendes zeigen:
Fig 1a eine Darstellung beim optischen Einlesen einer Kennung eines Elements
Fig 1b eine Darstellung beim Einlesen einer Kennung eines Elements per Funk
Fig 2a,2b eine erste Ausführungsform des Bediengeräts
Fig 3 eine zweite Ausführungsform des Bediengeräts

### Beschreibung der Ausführungsformen

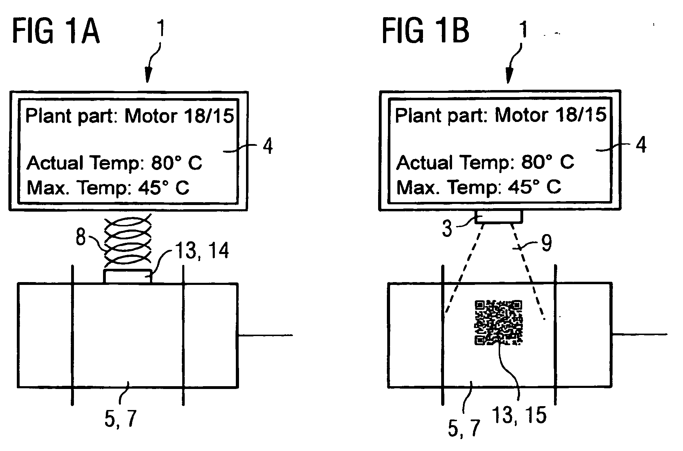

Die Fig 1a zeigt die Verfahrensschritte beim Überprüfen eines Elements 5 einer Industrieanlage 7 mittels eines mobilen Bediengeräts 1, wobei das Element als ein elektrischer Antriebsmotor eines Walzwerks 7 ausgebildet ist. Nachdem ein nicht dargestellter Bedienmann das Element 5 lokalisiert hat, wird das Element 5 durch das Bediengerät 1 identifiziert. Hierzu sendet das Bediengerät 1 über eine NFC Schnittstelle Funksignale 8 (d.h. elektromagnetische Wellen in einem bestimmten Frequenzbereich) in Richtung des Elements 5 aus. Auf dem Element 5 befindet sich ein passiver RFID Tag 14, dem eine Kennung 13 zugeordnet ist. Ausgelöst durch das eingehende Funksignal 8 sendet der RFID Tag 14 seine Kennung 13 mittels ausgehender Funkwellen 8 an das Bediengerät 1 zurück, sodass das Bediengerät 1 über dessen NFC Schnittstelle die Kennung 13 des Elements 5 einlesen kann. Das Bediengerät 1 führt anschließend einen Vergleich zwischen der eingelesenen Kennung 13 und einer auf dem Bediengerät 1 vorhandenen festgelegten Kennung des Elements 5 durch, sodass das Element 5 der Industrieanlage 7 eindeutig identifiziert werden kann. Im Anschluss daran fordert das Bediengerät 1 elementspezifische Informationen für das identifizierte Element 5 über ein drahtloses paketorientiertes Netzwerk von einem Condition Monitoring System an, das der Industrieanlage 7 zugeordnet ist. Konkret wird an das Bediengerät 1 ein IstWert und ein Soll-Wert einer Temperatur einer Wicklung des Elements 5 sowie die Bezeichnung des Elements 5 "Motor 18/15" übermittelt. Die übermittelten Daten für das Element 5 werden auf der Anzeige 4 des Bediengeräts 1 dargestellt. Im dargestellten Fall weist die Wicklung des Elektromotors 5 eine aktuelle Ist-Temperatur von 80°C auf, die höher ist als die max. zulässige Soll-Temperatur von 45°C. Basierend auf dieser Information kann der Bedienmann weitere Eingriffe am Element 5 vornehmen, beispielsweise eine Reinigung der Lüftungsschlitze des Elektromotors 5, sodass die Wicklungstemperatur auf eine zulässige Temperatur reduziert wird.

Die Fig 1b zeigt eine zweite Ausführungsform des erfindungsgemäßen Verfahrens, wobei im Unterschied zu Fig 1a die Kennung 13 des Elements 5 nicht über Funk sondern optisch ausgelesen wird. Konkret weist das Element 5 der Industrieanlage 7 wiederum eine Kennung 13 auf, die in Form eines zweidimensionalen Barcodes 15 (auch als QR Tag bezeichnet) auf der Mantelfläche des Elements angebracht ist. Die Kennung 13 wird über das Sichtfeld 9 einer Kamera 3, die sich auf der Vorderseite des Bediengeräts 1 befindet, optisch eingelesen. Um Übertragungsfehler bzw. Lesefehler durch Verschmutzungen (beispielsweise des QR Tags 15 oder des Kameraobjektivs 3) zu vermeiden, ist die elementspezifische Kennung 13 auf dem QR Tag 15 durch einen fehlerkorrigierenden Code codiert worden, sodass das Bediengerät 1 etwaige Übertragungsfehler selbsttätig erkennen und korrigieren kann. Die eingelesene Kennung 13 des Elements 5 wird durch eine nicht näher dargestellte Recheneinheit im Bediengerät 1 mit einer festgelegten Kennung verglichen, sodass das Element 5 eindeutig identifiziert werden kann. Anschließend werden über ein drahtloses Netzwerk je eine elementbezogene Ist- und Soll-Zustandsgröße des Elements 5 ausgelesen, wobei die Zustandsgrößen einer Temperatur des Elektromotors 5 zugeordnet sind. Die Ist-Zustandsgröße wird zusammen mit einer Soll-Zustandsgröße auf der Anzeige 4 des Bediengeräts 1 ausgegeben. Basierend auf diesen Daten kann ein nicht dargestellter Bedienmann die Funktion des Elements 5 überprüfen bzw. gegebenenfalls Korrekturmaßnahmen einleiten.

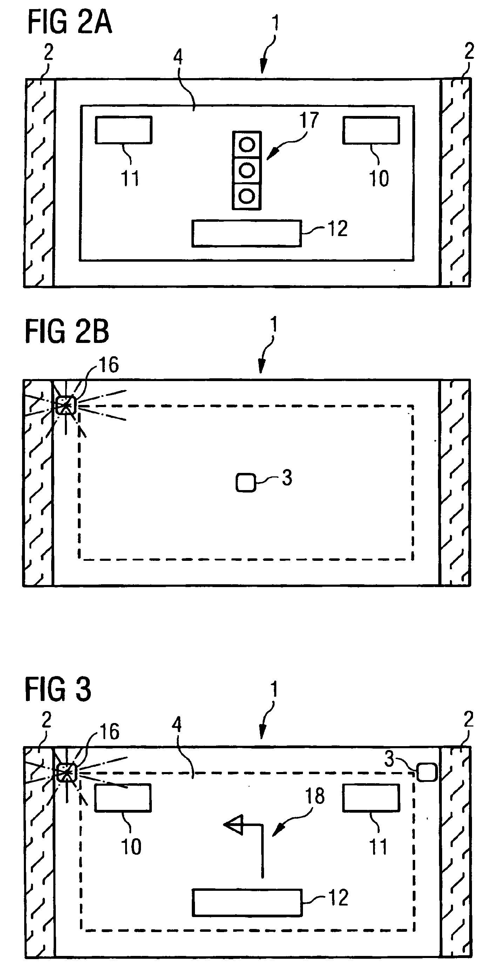

In Fig 2a ist eine Rückseite und in Fig 2b eine Vorderseite einer Ausführungsform eines Bediengeräts 1 näher dargestellt. Ein nicht dargestellter Bedienmann kann das Bediengerät 1 über die gummierten Griffzonen 2 händisch halten. Auf der durch den Bedienmann einsehbaren Rückseite des Bediengeräts weist das Bediengerät 1 eine Anzeige 4 auf, die als LCD Anzeige ausgebildet ist. Auf der Anzeige 4 können auf dem Anzeigefeld 11 ein Wert einer Soll-Zustandsgröße und auf dem Anzeigefeld 10 ein Wert einer Ist-Zustandsgröße eines Elements dargestellt werden; zusätzlich kann auf dem Feld 12 die Bezeichnung des zu überprüfenden Elements 5 der Industrieanlage 7 dargestellt werden. Auf dem Feld 17 wird die Ist-Zustandsgröße 10 im Vergleich mit der Soll-Zustandsgröße 11 mittels einer Ampelschaltung grafisch dargestellt. Ist die Ist-Zustandsgröße 10 in einem unzulässigen Bereich, wird eine rote Ampel dargestellt; ist die Ist-Zustandsgröße 10 in einem Warnbereich, so wird eine gelbe Ampel ausgegeben; ist die Ist-Zustandsgröße 10 in einem zulässigen Bereich, wird eine grüne Ampel dargestellt. Auf der Vorderseite des Bediengeräts 1 ist ein Kameraobjektiv 3 angeordnet, sodass das Bediengerät mittels der Kamera eine Kennung 13 einlesen oder ein Foto oder eine Folge von Fotos (ein *Video-Stream)* eines Elements 5 aufnehmen kann. Um den Einsatz des Bediengeräts 1 auch bei schlechter Sicht zu ermöglichen, ist auf der Vorderseite eine Beleuchtung 16 angeordnet. Zusätzlich kann das Bediengerät eine NFC Schnittstelle aufweisen, über die eine Kennung 13 des Elements 5 per Funk eingelesen werden kann.

Die Fig 3 stellt eine Vorderseite einer weiteren Ausführungsform eines Bediengeräts 1 näher dar, wobei im Unterschied zu den Figuren 2a, 2b die Anzeige 4 transparent bzw. transluzent ausgeführt ist. Durch diese Anzeige 4 kann ein nicht dargestellter Bedienmann die ihn umgebende Wirklichkeit (engl. *reality*) wahrnehmen, ohne das dazu eine Kamera notwendig wäre. Der Wirklichkeit werden die Anzeigeelemente 10-12 für die Ist- und Soll-Zustandsgröße sowie ein Feld 12 für die Bezeichnung des Elements 5 überlagert. Somit kann der Bedienmann die Wirklichkeit erweitert wahrnehmen (engl. *augmented reality).* Um die visuelle Dokumentation eines Elements zu ermöglichen, weist das Bediengerät 1 auf der Vorderseite wiederum eine Kamera 3 und eine als Kamerablitz ausgeführte Beleuchtung 16 auf.

Alle vorgenannten Ausführungsformen von Bediengeräten 1 umfassen zumindest ein Mittel zum Einlesen einer Kennung 13 eines Elements 13, eine Schnittstelle zu einem drahtlosen Netzwerk (z.B. ein Mobilfunknetz, ein WLAN oder DECT Netz) und eine Recheneinheit zum Decodieren einer Kennung 13 des Elements 5 bzw. zum Vergleichen einer eingelesenen Kennung mit einer festgelegte Kennung des Elements 5.

Bei den vorgenannten Ausführungsformen ist es vorteilhaft, wenn das Bediengerät 1 als ein sog. Industrietablet Computer ausgeführt ist. Das Bediengerät mit kompakten Abmaßen von ca. 300 x 200 x 30 mm umfasst eine Recheneinheit, eine Schnittstelle zu einem drahtlosen Netzwerk, einen GPS oder DGPS Empfänger mit einem digitalen Kompass, eine Kamera an der Vorderseite des Bediengeräts und eine Anzeige an der Rückseite des Bediengeräts. Vor der Überprüfung des Elements kann ein Bediener ein Element 5 der Industrieanlage 7 mittels des Bediengeräts 1 rasch auffinden, da das Bediengerät 1 - ähnlich einem an sich bekannten Navigationssystem - den Bediener zum Element 5 führt. Dabei wird auf der Anzeige 4 des Bediengeräts 1 jeweils der Abstand r und die Ausrichtung ϕ von der jeweiligen Ist-Position des Bediengeräts 1 zu einer festgelegten Ziel-Position des Elements 5 angezeigt (siehe Fig 3, Pfeil 18 für die Richtungsangabe). Zusätzlich oder alternativ zur Anzeige, kann die Navigation durch Sprachausgabe erfolgen bzw. unterstützt werden. Nachdem der Bediener die Position des Elements 5 erreicht hat, erfolgen die erfindungsgemäßen Schritte zur Überprüfung des Elements 5, konkret
- das Einlesen der Kennung 13 des Elements 5 durch das Bediengerät 1;
- das Identifizieren des Elements 5 durch den Vergleich der ausgelesenen Kennung 13 mit einer festgelegten Kennung 13 des Elements 5;
- das Übertragen von zumindest einer elementspezifischen Information 10 (z.B. einer Zustandsgröße) des identifizierten Elements 5 auf das Bediengerät 1; und
- der Ausgabe der übertragenen elementspezifischen Information 10 am Bediengerät.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Bezugszeichenliste

- 1: Bediengerät
- 2: Griffzone
- 3: Kameraobjektiv
- 4: Anzeige
- 5: Element
- 7: Industrieanlage
- 8: Funkwelle
- 9: Sichtfeld
- 10: Anzeigefeld Ist-Zustandsgröße
- 11: Anzeigefeld Soll-Zustandsgröße
- 12: Anzeigefeld Ziel
- 13: Kennung
- 14: RFID Tag
- 15: QR Tag
- 16: Beleuchtung
- 17: Ampel
- 18: Navigationsbereich

## Patentansprüche

1. Verfahren zum Überprüfen eines Elements (5) einer Industrieanlage (7) mittels eines mobilen Bediengeräts (1), wobei an dem Element eine elementspezifische Kennung (13) festgelegt ist, umfassend die Verfahrensschritte:
- berührungsloses Einlesen der Kennung (13) des Elements (5) durch das Bediengerät (1);
- Identifizieren des Elements (5) durch den Vergleich der eingelesenen Kennung (13) mit der festgelegten Kennung (13) des Elements (5);
- Übertragen von zumindest einer elementspezifischen Information (10) für das identifizierte Element (5) auf das Bediengerät (1), wobei die elementspezifische Information (10) eine Ist-Zustandsgröße des Elements (5) während des Betriebs der Industrieanlage, insbesondere bei bestimenten Arbeitspunkten ist; und
- Ausgabe der übertragenen elementspezifischen Information (10) am Bediengerät (1).

2. Verfahren nach Anspruch 1, **dadurch gekennzeichnet, dass** das Einlesen der Kennung (13) optisch erfolgt.

3. Verfahren nach Anspruch 2, **dadurch gekennzeichnet, dass** die elementspezifische Kennung (13,15) ein 1-dimensionaler oder ein 2-dimensionaler Barcode (15) ist.

4. Verfahren nach einem der Ansprüche 2 bis 3, **dadurch gekennzeichnet, dass** die optisch eingelesene Kennung (13,15) einem Fehlererkennungsverfahren unterzogen wird.

5. Verfahren nach Anspruch 1, **dadurch gekennzeichnet, dass** das Einlesen der Kennung (13) über Funk erfolgt.

6. Verfahren nach Anspruch 5, **dadurch gekennzeichnet, dass** die elementspezifische Kennung (13,14) ein Signal eines aktiven oder passiven RFID-Tags (14) ist.

7. Verfahren nach Anspruch 1, **dadurch gekennzeichnet, dass** die elementspezifische Information (10) über ein drahtloses paketorientiertes Netzwerk auf das Bediengerät (1) übertragen wird.

8. Verfahren nach Anspruch 1, **dadurch gekennzeichnet, dass** die übertragene elementspezifische Information (10) am Bediengerät (1) optisch angezeigt oder akustisch ausgegeben wird.

9. Verfahren nach Anspruch 1, **dadurch gekennzeichnet, dass** die elementspezifischen Information (10) einen Soll-Wert (11) der Zustandsgröße (10) des Elements (5) umfasst.

10. Verfahren nach Anspruch 1, **dadurch gekennzeichnet, dass** die elementspezifische Information (10) ein Datenblatt oder eine Notiz umfasst.

11. Verfahren nach Anspruch 1, **dadurch gekennzeichnet, dass** nach der Überprüfung des Elements (5) eine Bezeichnung des Elements (12) und ein Zeitstempel der Überprüfung in einer Datenbank abgelegt werden.

12. Verfahren nach Anspruch 1, **dadurch gekennzeichnet, dass** als elementspezifische Information (10) eine Information über eine elementspezifische Routine von einer Anlagensteuerung oder von einem Condition Monitoring System auf das Bediengerät (1) übertragen wird, und die elementspezifische Routine am Bediengerät (1) aufgerufen werden kann.

## Claims

1. Method for verifying an element (5) of an industrial plant (7) by means of a mobile operating device (1), wherein an element-specific identification (13) is defined on the element, comprising the method steps:
- Non-contact reading of the identification (13) of the element (5) by the operating device (1);
- Identification of the element (5) by comparing the identification (13) read in with the defined identification (13) of the element (5);
- Transfer of at least one item of element-specific information (10) for the identified element (5) to the operating device (1), wherein the element-specific information (10) is an actual state variable of the element (5) during the operation of the industrial plant, especially at certain points during operation; and
- Output of the transferred element-specific information (10) at the operating device (1).

2. Method according to claim 1, **characterised in that** the identification (13) is read in optically.

3. Method according to claim 2, **characterised in that** the element-specific identification (13, 15) is a 1-dimensional or a 2-dimensional barcode (15).

4. Method according to one of claims 2 to 3, **characterised in that** the identification read-in optically (13, 15) is subjected to an error detection method.

5. Method according to claim 1, **characterised in that** the identification (13) is read in wirelessly.

6. Method according to claim 5, **characterised in that** the element-specific identification (13, 14) is a signal of an active or passive RFID tag (14).

7. Method according to claim 1, **characterised in that** the element-specific information (10) is transmitted over a packet-oriented network to the operating device (1).

8. Method according to claim 1, **characterised in that** the transferred element-specific information (10) is displayed optically or output acoustically at the operating device (1).

9. Method according to claim 1, **characterised in that** the element-specific information (10) comprises a nominal value (11) of the state variable (10) of the element (5).

10. Method according to claim 1, **characterised in that** the element-specific information (10) comprises a data sheet or a note.

11. Method according to claim 1, **characterised in that,** after the verification of the element (5), a designation of the element (12) and a time stamp of the transmission are stored in a database.

12. Method according to claim 1, **characterised in that** information about an element-specific routine of a plant controller or of a condition monitoring system is transferred to the operating device (1) as element-specific information (10), and the element-specific routine can be called up at the operating device (1).

## Revendications

1. Procédé de vérification d'un élément (5) d'une installation industrielle (7) au moyen d'un appareil de commande mobile (1), un identifiant (13) spécifique à l'élément étant apposé sur l'élément (5), procédé comprenant les étapes suivantes :
- lecture sans contact de l'identifiant (13) de l'élément (5) par l'appareil de commande (1) ;
- identification de l'élément (5) par comparaison de l'identifiant (13) lu avec l'identifiant (13) apposé de l'élément (5) ;
- transmission d'au moins une information (10) spécifique à l'élément, pour l'élément (5) identifié, à l'appareil de commande (1), l'information (10) spécifique à l'élément étant une grandeur d'état réel de l'élément (5) pendant le fonctionnement de l'installation industrielle, en particulier à certains points de fonctionnement ; et
- sortie sur l'appareil de commande (1) de l'information (10) spécifique à l'élément transmise.

2. Procédé selon la revendication 1, **caractérisé en ce que** la lecture de l'identifiant (13) s'effectue optiquement.

3. Procédé selon la revendication 2, **caractérisé en ce que** l'identifiant (13, 15) spécifique à l'élément est un code-barres (15) unidimensionnel ou bidimensionnel.

4. Procédé selon l'une des revendications 2 à 3, **caractérisé en ce que** l'identifiant (13, 15) lu optiquement est soumis à un procédé de détection d'erreurs.

5. Procédé selon la revendication 1, **caractérisé en ce que** la lecture de l'identifiant (13) s'effectue par radio.

6. Procédé selon la revendication 5, **caractérisé en ce que** l'identifiant (13, 14) spécifique à l'élément est un signal d'une balise RFID (14) active ou passive

7. Procédé selon la revendication 1, **caractérisé en ce que** l'information (10) spécifique à l'élément est transmise à l'appareil de commande (1) sur un réseau sans fil orienté paquet.

8. Procédé selon la revendication 1, **caractérisé en ce que** l'information (10) spécifique à l'élément transmise est affichée optiquement ou émise acoustiquement sur l'appareil de commande (1).

9. Procédé selon la revendication 1, **caractérisé en ce que** l'information (10) spécifique à l'élément comprend une valeur de consigne (11) de la grandeur d'état (10) de l'élément (5).

10. Procédé selon la revendication 1, **caractérisé en ce que** l'information (10) spécifique à l'élément comprend une fiche de données ou une notice.

11. Procédé selon la revendication 1, **caractérisé en ce que,** après la vérification de l'élément (5), une désignation de l'élément (12) et un horodatage de la vérification sont déposés dans une base de données.

12. Procédé selon la revendication 1, **caractérisé en ce que,** en tant qu'information (10) spécifique à l'élément, une information sur une routine spécifique à l'élément est transmise à l'appareil de commande (1) par un système de commande de l'installation ou par un Condition Monitoring System, et **en ce que** la routine spécifique à l'élément peut être appelée sur l'appareil de commande (1).
